# EUROPÄISCHE PATENTSCHRIFT

(11) **EP 3 541 563 B1**
(45) Veröffentlichungstag und Bekanntmachung des Hinweises auf die Patenterteilung: **15.07.2020**
(21) Anmeldenummer: 17800825.6
(22) Anmeldetag: 16.11.2017
(51) Int. Cl.: B23K 20/04

(54) **VERFAHREN UND VORRICHTUNG ZUR HERSTELLUNG EINES KONTINUIERLICHEN BANDFÖRMIGEN VERBUNDMATERIALS**
METHOD AND DEVICE FOR PRODUCING A CONTINUOUS STRIP-SHAPED COMPOSITE MATERIAL
PROCÉDÉ ET DISPOSITIF DE FABRICATION D'UN MATÉRIAU COMPLEXE SOUS FORME DE BANDE CONTINUE

(30) Priorität: 18.11.2016 DE 102016222813; 07.12.2016 DE 102016224412; 28.12.2016 DE 102016226277
(43) Veröffentlichungstag der Anmeldung: 25.09.2019
(73) Patentinhaber: SMS Group GmbH, 40237 Düsseldorf (DE)
(72) Erfinder: RUNKEL, Thomas, 57074 Siegen (DE); WANS, Jochen, 40667 Meerbusch (DE); WEYER, Axel, 42349 Wuppertal (DE)
(74) Vertreter: Kross, Ulrich
(86) Internationale Anmeldenummer: PCT/EP2017/079381
(87) Internationale Veröffentlichungsnummer: WO 2018/091562

(56) Entgegenhaltungen:
- EP-A1- 1 980 345
- DE-A1- 10 339 191
- JP-A- S62 166 088
- JP-A- S63 104 789
- US-A- 2 753 623

## Beschreibung

Die Erfindung betrifft ein Verfahren zur Herstellung eines kontinuierlichen bandförmigen Verbundmaterials nach dem Oberbegriff von Anspruch 1, und eine entsprechende Vorrichtung nach dem Oberbegriff von Anspruch 11.

Nach dem Stand der Technik ist es bekannt, zumindest zwei Materialpartner aus Metall bzw. Stahl mittels Walz- bzw. Warmschweißen zu einem Verbundmaterial zusammenzufügen. Dies ist z.B. in EP 1 690 606 B1, EP 201 202 B1,
EP 053 600 B1 und EP 04 063 B1 offenbart. Hiernach werden plattenförmige Bleche zunächst aufeinander gebracht, anschließend zu einem Plattenpaket miteinander verschweißt, und dann zu einem walzplattierten Warmband bzw. Verbundmaterial warmgewalzt. Eine solche Technologie bringt den Nachteil mit sich, dass der Zwischenschritt, wonach die aufeinander gelegten plattenförmigen Bleche zunächst miteinander verschweißt werden, einen Mehraufwand für den Produktionsablauf bedeutet und die maximale Produktionskapazität begrenzt.

Nach dem Stand der Technik ist es weiters bekannt, Metallteile in fester Phase in Form von Metallbändern zu verbinden. Hierbei werden die einzelnen Metallbänder von Coils abgewickelt, anschließend erwärmt und miteinander in Berührung gebracht, und sodann zum Herstellen eines bandförmigen Verbundmaterials miteinander warmgewalzt. Dies ist z.B. aus DE 1 427 387 A, DE 1 271 519 A und CN 102310077 A bekannt. Die hierbei verwendeten Materialpartner bestehen einerseits aus einem Metallband aus rostfreiem Stahl bzw. Edelstahl, und andererseits aus einem herkömmlichen Stahl, z.B. einem Kohlenstoffstahl. Eine solche Kombination von Materialpartnern führt nachteilig zu einem begrenzten Produktspektrum.

Aus JP S61 283476 sind ein gattungsgemäßes Verfahren zur Herstellung eines kontinuierlichen bandförmigen Verbundmaterials nach dem Oberbegriff von Anspruch 1, und eine entsprechende gattungsgemäße Vorrichtung nach dem Oberbegriff von Anspruch 11 bekannt. Des Weiteren ist eine ähnliche Technologie aus US 2 753 623 A bekannt, mit der ein mindestens zweischichtiges ebenes Verbundmetall hergestellt wird.

Bei Verarbeitung von Stahl erfolgt ein Warmwalzen des Materials typischerweise bei einer Temperatur oberhalb der Rekristallisationstemperatur von Stahl, d.h. bei einer Temperatur von beispielsweise > 720 °C.

Entsprechend liegt der Erfindung die Aufgabe zugrunde, bei der Herstellung eines kontinuierlichen Metallbandes in Form eines bandförmigen Verbundmaterials aus Stahl die Produktqualität zu optimieren.

Diese Aufgabe wird durch ein Verfahren gemäß Anspruch 1 und durch eine Vorrichtung mit den in Anspruch 11 angegebenen Merkmalen gelöst. Vorteilhafte Weiterbildungen der Erfindung sind Gegenstand der abhängigen Ansprüche.

Ein Verfahren nach der vorliegenden Erfindung dient zur Herstellung eines kontinuierlichen Metallbandes in Form eines bandförmigen Verbundmaterials, mit den Schritten: (i) Bereitstellen eines Grundwerkstoffs aus Metall, der in Form eines aus Stahl oder aus einer Stahl-Legierung gebildeten Metallbands von einer ersten Coil-Abwicklungseinrichtung abgewickelt wird, und Bereitstellen zumindest eines Plattierungswerkstoffs aus Metall, der in Form eines aus Stahl oder aus einer Stahl-Legierung gebildeten Metallbands von einer zweiten Coil-Abwicklungseinrichtung abgewickelt wird; (ii) Zusammenführen des von der ersten Coil-Abwicklungseinrichtung abgewickelten Metallbands und des von der zweiten Coil-Abwicklungseinrichtung abgewickelten Metallbands ; und (iii) Wwalzen der in Richtung zueinander gebrachten abgewickelten Metallbänder, so dass damit durch Walzplattieren ein einziges kontinuierliches bandförmiges Verbundmaterial bestehend aus dem Grundwerkstoff und dem Plattierungswerkstoff gebildet wird. Sowohl der Grundwerkstoff als auch der Plattierungswerkstoff und die hiermit abgewickelten Metallbänder bestehen jeweils aus Stahl, jedenfalls nicht aus rostfreiem Stahl. Die erste und zweite Coil-Abwicklungseinrichtung sind während des Schritts (i) in einer beheizbaren Umgebung unter Schutzgasatmosphäre aufgenommen, so dass vor den Schritten (ii) und (iii) für die von den Coil-Abwicklungseinrichtungen abgewickelten Metallbänder eine vorbestimmte Temperatur von zumindest 720°C eingestellt wird. Die von einer jeweiligen Coil-Abwicklungseinrichtung abgewickelten Metallbänder werden vor dem Schritt (ii) durch Verwendung von Hochdruck-Wasser entzundert. Das Zusammenführen der Metallbänder erfolgt in Schritt (ii) im warmen Zustand, bei dem diese Metallbänder jeweils eine Temperatur von zumindest 720°C aufweisen. Vor dem Schritt (iii) wird die Oberflächentemperatur aller Metallbänder an den einander gegenüberliegenden Oberflächen hiervon durch Verwendung einer Induktionsheizung erhöht, so dass das Walzen der Metallbänder in Schritt (iii) als Warmwalzen ausgeführt wird. Während des Schritts (ii) und vor dem Schritt (iii) werden die von einer jeweiligen Coil-Abwicklungseinrichtung abgewickelten Metallbänder in einer Schutzgas-Atmosphäre geführt.

In gleicher Weise sieht die Erfindung eine Vorrichtung zur Herstellung eines kontinuierlichen Metallbandes in Form eines bandförmigen Verbundmaterials vor. Diese Vorrichtung umfasst zumindest eine erste Coil- Abwicklungseinrichtung, mit der ein aus Stahl oder aus einer Stahl-Legierung gebildetes Metallband aus Metall bereitgestellt wird, das als Grundwerkstoff dient, zumindest eine zweite Coil- Abwicklungseinrichtung, mit der ein aus Stahl oder aus einer Stahl-Legierung gebildetes Metallband bereitgestellt wird, das als Plattierungswerkstoff dient, zumindest ein Walzwerk in Form einer Walzplattierungseinrichtung, die in Linie mit der ersten und zweiten Coil-Abwicklungseinrichtung und jeweils stromabwärts hiervon angeordnet ist, und eine zwischen einerseits den Coil-Abwicklungseinrichtungen und andererseits der Walzplattierungseinrichtung angeordnete Zusammenführungseinrichtung, mittels der die von den Coil-Abwicklungseinrichtungen abgewickelten Metallbänder in Richtung zueinander bringbar sind. Die erste und zweite Coil-Abwicklungseinrichtung sind in zumindest einer beheizbaren Kammer unter Schutzgasatmosphäre aufgenommen, wobei die von den Coil-Abwicklungseinrichtungen abgewickelten Metallbänder mittels der Zusammenführungseinrichtung im warmen Zustand in Richtung zueinander bringbar sind.

Sowohl der Grundwerkstoff als auch der Plattierungswerkstoff bestehen jeweils aus Stahl, wobei zwischen einerseits den Coil-Abwicklungseinrichtungen und andererseits der Zusammenführungseinrichtung zumindest eine Reinigungseinrichtung in Form einer Hochdruckwasser-Entzunderungseinrichtung angeordnet ist, mittels der die von den Coil-Abwicklungseinrichtungen abgewickelten Metallbänder entzundert werden. Zwischen der Zusammenführungseinrichtung und der unmittelbar stromabwärts davon angeordneten Walzplattierungseinrichtung ist zumindest eine Temperaturbeeinflussungseinrichtung in Form einer Induktionsheizung vorgesehen, mittels der die von den jeweiligen Coil-Abwicklungseinrichtungen abgewickelten Metallbänder an ihren einander gegenüberliegenden Oberflächen erwärmbar sind, so dass eine Anordnung von Materialpartnern gebildet aus den von den Coil-Abwicklungseinrichtungen abgewickelten Metallbändern in der Walzplattierungseinrichtung warmwalzbar ist, so dass damit durch Walzplattieren ein einziges kontinuierliches bandförmiges Verbundmaterial bestehend aus dem Grundwerkstoff und dem Plattierungswerkstoff entsteht. Des weiteren umfasst die Vorrichtung eine Schutzgas-Einrichtung als Teil der Zusammenführungseinrichtung, wobei die von den jeweiligen Coil-Abwicklungseinrichtungen abgewickelten Metallbänder innerhalb der Schutzgas-Einrichtung in einer Schutzgas-Atmosphäre geführt sind.

Im Sinne der vorliegenden Erfindung sind die nachstehenden Aspekte wie folgt zu verstehen:
- Im Sinne der vorliegenden Erfindung ist das Merkmal "Zusammenführen der Metallbänder", wie es z.B. für den Schritt (ii) des erfindungsgemäßen Verfahrens definiert ist, dahingehend zu verstehen ist, dass hierbei diese Metallbänder in Richtung zueinander gebracht werden. Dies kann bedeuten, dass diese Materialpartner sich während des Schritts (ii) bzw. an dessen Ende noch nicht berühren bzw. kontaktieren. Jedenfalls werden die genannten Materialpartner durch das Zusammenführen gemäß Schritt (ii), das in der Zusammenführungseinrichtung durchgeführt wird, derart in Richtung zueinander gebracht, dass anschließend, nämlich in Schritt (iii) des erfindungsgemäßen Verfahrens bzw. in der Walzplattierungseinrichtung der erfindungsgemäßen Vorrichtung eine Anordnung gebildet aus den von den jeweiligen Coil-Abwicklungseinrichtungen abgewickelten Metallbändern warmgewalzt werden kann.
- Das Attribut "warm" bzw. die Definition "im warmen Zustand", das bzw. die im Zusammenhang mit dem Schritt (ii) genannt ist, bezieht sich auf die Temperatur der Materialpartner in Form der einzelnen abgewickelten Metallbänder, und ist dahingehend zu verstehen, dass diese Temperatur oberhalb der Rekristallisationstemperatur von Stahl (z.B. 720°C) liegt.

Der Erfindung liegt die wesentliche Erkenntnis zugrunde, dass sowohl der Grundwerkstoff als auch der Plattierungswerkstoff jeweils aus Stahl bestehen. Dies bedeutet, dass die Metallbänder, die von der ersten Coil-Abwicklungseinrichtung und von der zweiten Coil-Abwicklungseinrichtung abgewickelt werden und nach einem geeigneten In-Richtung-Zueinander-Bringen dann zu einem einzigen kontinuierlichen bandförmigen Verbundmaterial warmgewalzt werden, jeweils aus Stahl oder einer Stahl-Legierung bestehen, jedenfalls nicht aus rostfreiem Stahl. In dieser Weise ist ein breites Produktspektrum für das erzeugte bandförmige Verbundmaterial möglich. Zum Entfernen von Verunreinigungen bzw. von Zunder ist für die erfindungsgemäße Vorrichtung zumindest eine Reinigungseinrichtung, vorzugsweise zumindest eine Entzunderungseinrichtung, vorgesehen, die zwischen einerseits den Coil-Abwicklungseinrichtungen und andererseits der Zusammenführungseinrichtung angeordnet ist. Durch eine solche Reinigungseinrichtung werden die Oberflächen der Metallbänder, die beim Warmwalzen gemäß Schritt (iii) miteinander in Kontakt gelangen, gereinigt, vorzugsweise entzundert, um eine gute Verbindung zwischen diesen Materialpartnern mittels des Walzplattieren zu gewährleisten.

Als Material für den Grundwerkstoff bzw. den Plattierungswerkstoff können Stahl oder Stahl-Legierungen verwendet werden. Grundsätzlich ist es für die vorliegende Erfindung möglich, dass die von den Coil-Abwicklungseinrichtungen abgewickelten Metallbänder aus unterschiedlichen Materialgüten bestehen. Beispielsweise können hierzu unterschiedliche Stahlgüten verwendet werden, die dann im Schritt (iii) des erfindungsgemäßen Verfahrens zu einem einzigen kontinuierlichen bandförmigen Verbundmaterial verbunden werden.

Dadurch, dass eine Coil-Abwicklungseinrichtung in einer beheizbaren Umgebung aufgenommen ist, kann diese Coil-Abwicklungseinrichtung auf eine vorbestimmte Temperatur erwärmt werden, währenddessen im Schritt (i) ein Plattierungswerkstoff in Form eines Metallbands hiervon abgewickelt wird. In Folge dessen weist dann das abgewickelte Metallband bereits eine vorbestimmte Temperatur, vorzugsweise größer als die Rekristallisationstemperatur von Stahl, auf, wenn es in Richtung der Zusammenführungseinrichtung und anschließend zur Walzplattierungseinrichtung transportiert wird. Zweckmäßigerweise können alle der Coil-Abwicklungseinrichtungen in jeweils separaten beheizbaren Umgebungen, z.B. in Form einer beheizbaren Kammer oder dergleichen, aufgenommen sein, so dass alle der hiervon abgewickelten Bänder für die weitere Bearbeitung vortemperiert sind. Die Erwärmung der Coil-Abwicklungseinrichtungen bzw. der hiervon abgewickelten Metallbänder kann auch unter Schutzgasatmosphäre durchgeführt werden.

In vorteilhafter Weiterbildung des erfindungsgemäßen Verfahrens wird vor dem Schritt (ii) eine Geschwindigkeit zumindest eines Materialpartners gebildet aus den von den Coil-Abwicklungseinrichtungen abgewickelten Metallbändern gezielt beeinflusst. Diese Beeinflussung der Geschwindigkeit zumindest einer dieser beiden Materialpartner kann entweder gesteuert oder geregelt erfolgen, in Abhängigkeit von weiteren Prozessgrößen, was nachstehend noch im Detail erläutert ist. Die Beeinflussung der Geschwindigkeit eines Metallbands kann direkt mit einer zugehörigen Coil-Abwicklungseinrichtung durchgeführt werden, von dem es abgewickelt wird.

Das Warmwalzen der abgewickelten Metallbänder zu einem einzigen kontinuierlichen bandförmigen Verbundmaterial mittels Warmwalzen wird dadurch verbessert, wenn die Temperatur dieser Materialpartner aneinander angepasst wird, bevor in Schritt (iii) das Warmwalzen erfolgt. Dabei kann es auch vorteilhaft sein, die Temperaturen aufgrund unterschiedlicher Materialgüten bewusst unterschiedlich einzustellen. Zu diesem Zweck werden die Metallbänder vor dem Schritt (ii) und/oder vor dem Schritt (iii) erwärmt, um deren Temperatur gezielt zu beeinflussen und an die Temperatur eines jeweils anderen Materialpartners anzugleichen. Zur Erwärmung eines Metallbands ist zumindest eine Erwärmungseinrichtung vorgesehen, die stromaufwärts der Zusammenführungseinrichtung und/oder als Teil hiervon angeordnet sein kann, wobei die Metallbänder durch diese Erwärmungseinrichtung hindurchgeführt wird/werden. Ein besonders hoher Energieeintrag lässt sich z.B. mit einer Erwärmungseinrichtung in Form einer Induktionsheizung erzielen, verbunden mit dem Vorteil, dass diese einen nur geringen Bauraum beansprucht, bei gleichzeitig hoher Energiedichte.

In vorteilhafter Weiterbildung der Erfindung kann vorgesehen sein, dass die von den Coil-Abwicklungseinrichtungen abgewickelten Metallbänder vor dem Schritt (ii) seitlich geführt werden, um dadurch diese Materialpartner relativ zueinander auszurichten. In gleicher Weise kann dies auch während des Schritts (ii) und/oder vor dem Schritt (iii) erfolgen. Hierzu ist zumindest eine Seitenbeeinflussungseinrichtung vorgesehen, die stromaufwärts der Zusammenführungseinrichtung und/oder als Teil dessen angeordnet sein kann. Ergänzend oder alternativ kann diese Seitenbeeinflussungseinrichtung auch stromaufwärts der Walzplattierungseinrichtung angeordnet sein. Die Seitenbeeinflussungseinrichtung kann z.B. in Form einer Führungsrolle oder eines Führungslineals ausgebildet sein, mit der bzw. mit dem die Seitenränder der Brammen in Kontakt gelangen, um wie erläutert seitlich zueinander ausgerichtet zu werden.

In vorteilhafter Weiterbildung der Erfindung kann die vorstehend genannte Seitenbeeinflussungseinrichtung in Form eines Führungslineals ausgebildet sein, das durch einen Aktuator insbesondere mit einer vorbestimmten Kraft in Richtung der Bandmitte bewegt wird. In dieser Weise ist auch eine Ausrichtung der beiden Materialpartner in Richtung der Bandmitte möglich.

In vorteilhafter Weiterbildung der Erfindung kann vorgesehen sein, dass eine Seitenbeeinflussungseinrichtung, vorzugsweise in Form eines Führungslineals, auch stromabwärts der Walzplattierungseinrichtung vorgesehen ist. Für diesen Fall ist sichergestellt, dass das erzeugte kontinuierliche bandförmige Verbundmaterial auch nach dem Schritt (iii) seitlich geführt wird, z.B. um das Verbundmaterial zentriert in der Mitte eines Rollgangs durch die Walzstraße und deren zugehörige Walzgerüste hindurch zu führen. Hierbei kann auch vorgesehen sein, dass ein Führungslineal mit einer vorbestimmten Kraft in Richtung der Bandmitte bewegt wird, um das erzeugte Verbundmaterial an seinen Seitenrändern zu kontaktieren und (ggf. in Richtung der Bandmitte zurück-) zu führen.

Das Verbinden der einzelnen Materialpartner mittels des Warmwalzens in Schritt (iii) bzw. durch die Walzplattierungseinrichtung wird dadurch optimiert, wenn die von einer Coil-Abwicklungseinrichtung abgewickelten Metallbänder vor dem Schritt (iii) geeignet gereinigt werden, nämlich an einer Oberfläche daran, die einem weiteren Metallband gegenüberliegt und damit beim Warmwalzen in Schritt (iii) in Kontakt gelangt. Hierzu ist für die erfindungsgemäße Vorrichtung zumindest eine Reinigungseinrichtung in Form der Hochdruckwasser-Entzunderungseinrichtung vorgesehen, die zwischen einerseits der bzw. den Coil-Abwicklungseinrichtung(en) und andererseits der Zusammenführungseinrichtung angeordnet ist. Ggf. kann die Reinigungseinrichtung auch als Teil der Zusammenführungseinrichtung ausgebildet sein. Durch die Hochdruckwasser-Entzunderungseinrichtung erfolgt die Reinigung der Metallbänder dadurch, dass ein Fluid in Form von Hochdruck-Wasser auf die einander gegenüberliegenden Oberflächen der Metallbänder aufgebracht wird. Das Entzundern der Metallbänder ist wegen der Verwendung von Stahl oder einer Stahl-Legierung hierfür besonders vorteilhaft.

Das Verbinden der einzelnen Materialpartner mittels des Warmwalzens in Schritt (iii) bzw. durch die Walzplattierungseinrichtung kann weiter dadurch optimiert werden, dass vor dem Schritt (iii) bzw. stromaufwärts der Walzplattierungseinrichtung eine Oberflächentemperatur zumindest eines von einer Coil-Abwicklungseinrichtung abgewickelten Metallbands verändert wird. Hierzu ist für die erfindungsgemäße Vorrichtung eine Temperaturbeeinflussungseinrichtung in Form einer Induktionsheizung vorgesehen, die zwischen der Zusammenführungseinrichtung und einer unmittelbar stromabwärts davon angeordneten Walzplattierungseinrichtung positioniert ist. Hierdurch wird eine Erhöhung der Oberflächentemperatur realisiert, wobei die besagte Temperaturbeeinflussungseinrichtung auf die Oberfläche zumindest eines Metallbands gerichtet ist.

Die Qualität einer Verbindung von zumindest zwei Metallbändern, aus denen das gewünschte kontinuierliche bandförmigem Verbundmaterial hergestellt wird, wird weiter dadurch verbessert, dass die von einer Coil-Abwicklungseinrichtung abgewickelten Metallbänder in einer Schutzgas-Atmosphäre geführt werden. Zu diesem Zweck dient die Schutzgas-Einrichtung, die als Teil der Zusammenführungseinrichtung ausgebildet ist, bzw. eine Schutzgas-Einrichtung, die vor der Zusammenführungseinrichtung angeordnet ist und/oder als Teil einer stromabwärts unmittelbar angrenzend an die Zusammenführungseinrichtung angeordneten Walzplattierungseinrichtung ausgebildet ist. Entsprechend werden die Metallbänder bei dem erfindungsgemäßen Verfahren vor dem Schritt (ii) und/oder während des Schritts (ii) und/oder vor dem Schritt (iii) in einer Schutzgas-Atmosphäre geführt. Weil die Metallbänder aus Stahl oder einer Stahl-Legierung bestehen, wird hierdurch die Bildung von Zunder zumindest vermindert oder gar ausgeschlossen.

Das Verbinden der einzelnen Metallbänder kann weiters dadurch verbessert werden, wenn vor dem Schritt (iii) bzw. stromaufwärts der Walzplattierungseinrichtung eine Profilierung zumindest eines von einer Coil-Abwicklungseinrichtung abgewickelten Metallbands erfolgt. Bei einer solchen Profilierung kann zumindest einer der genannten Materialpartner an einem Seitenrand davon schräg angefast werden. Ergänzend und/oder alternativ kann bei einer solchen Profilierung vorgesehen sein, dass zumindest ein Metallband durch einen vertikalen Schnitt besäumt wird. Jedenfalls wird durch die vorstehend genannte Profilierung sichergestellt, dass die Materialpartner, die im Schritt (iii) bzw. durch die Walzplattierungseinrichtung warmgewalzt werden, auch im Bereich ihrer Ränder derart aufeinander liegen bzw. zueinander ausgerichtet sind, dass ein Verbinden dieser Materialpartner in Form der Metallbänder durch das anschließende Warmwalzen in homogener Weise gewährleistet ist.

In vorteilhafter Weiterbildung der Erfindung kann vorgesehen sein, dass im Anschluss an den Schritt (iii) eine innere Materialbeschaffenheit, insbesondere die Verbindungsqualität des erzeugten einzigen kontinuierlichen bandförmigen Verbundmaterials erfasst wird, vorzugsweise durch Röntgen und/oder Ultraschall. Zu diesem Zweck ist für die erfindungsgemäße Vorrichtung stromabwärts einer Walzplattierungseinrichtung eine Messeinrichtung vorgesehen, mittels der eine Materialbeschaffenheit des erzeugten einzigen kontinuierlichen bandförmigen Verbundmaterials erfasst werden kann. Zweckmäßigerweise wird auf Grundlage der erfassten Materialbeschaffenheit dann durch eine Steuereinrichtung ein Prozesssignal erzeugt, mit dem für das erfindungsgemäße Verfahren ein Regelkreis ausgebildet werden kann.

In vorteilhafter Weiterbildung des erfindungsgemäßen Verfahrens kann vorgesehen sein, dass dieses Verfahren automatisch in Abhängigkeit von zumindest einer vorbestimmten Prozessgröße durchgeführt wird. Unter Bezugnahme auf die vorhergehende Erläuterung der Erfindung kann diese Prozessgröße z.B. aus der Geschwindigkeit, die vor dem Schritt (ii) für die von den Coil-Abwicklungseinrichtungen abgewickelten Metallbändern vorliegt, und/oder aus der Materialbeschaffenheit des erzeugten kontinuierlichen bandförmigen Verbundmaterials bestehen. Des Weiteren kann eine solche Prozessgröße auch gewählt sein aus der Gruppe gebildet insbesondere aus einem Temperaturunterschied der Metallbänder vor dem Schritt (ii) und/oder vor dem Schritt (iii), den unterschiedlichen Materialeigenschaften und dem Dickenverhältnis der eingesetzten Materialpartner bzw. Metallbänder, einer jeweiligen Geschwindigkeit der Arbeitswalzen der Walzplattierungseinrichtung, und/oder einer Dickenreduzierung, die für das erzeugte einzige bandförmigem Verbundmaterial in Schritt (iii) erzielt wird. Auf Grundlage der vorstehend genannten möglichen Prozessgrößen kann das erfindungsgemäße Verfahren als Regelkreis ausgebildet sein und entsprechend automatisch durchgeführt werden.

In vorteilhafter Weiterbildung der Erfindung kann vorgesehen sein, dass eine Geschwindigkeit der jeweiligen Arbeitswalzen einer Walzplattierungseinrichtung derart angesteuert werden, dass einer möglichen "Skibildung" des bandförmigen Verbundmaterials, das durch die bzw. in der Walzplattierungseinrichtung warmgewalzt wird, beim Austreten aus dieser Walzplattierungseinrichtung entgegengewirkt wird. Dies empfiehlt sich insbesondere für eine erste Walzplattierungseinrichtung, die stromabwärts unmittelbar angrenzend an die Zusammenführungseinrichtung angeordnet ist. Entsprechend ist ein weiterer Transport des erzeugten kontinuierlichen bandförmigen Verbundmaterials in der Walzstrasse möglich, ohne dass sich eine "Skibildung" am vorderen Ende des erzeugten bandförmigen Verbundmaterials einstellt und dadurch eine Schädigung von Walzgerüsten stromabwärts der Zusammenführungseinrichtung zu befürchten wäre.

In vorteilhafter Weiterbildung der Erfindung kann vorgesehen sein, dass das erzeugte kontinuierliche bandförmige Verbundmaterial im Anschluss an den Schritt (iii) bzw. stromabwärts einer Walzplattierungseinrichtung, die unmittelbar an die Zusammenführungseinrichtung angrenzt, durchtrennt bzw. vereinzelt wird. Ergänzend und/oder alternativ kann vorgesehen sein, dass stromabwärts einer unmittelbar an die Zusammenführungseinrichtung angeordneten Walzplattierungseinrichtung eine Niederhaltevorrichtung positioniert ist, mittels der eine Skibildung des erzeugten einzigen kontinuierlichen bandförmigen Verbundmaterials verhindert wird.

In vorteilhafter Weiterbildung der Erfindung kann vorgesehen sein, dass eine dritte Coil-Abwicklungseinrichtung vorgesehen ist, mit der in Schritt (i) des erfindungsgemäßen Verfahrens ein weiterer Plattierungswerkstoff in Form eines Metallbands bereitgestellt wird. Diese dritte Coil-Abwicklungseinrichtung ist ebenfalls in Linie mit der Walzplattierungseinrichtung angeordnet, vorzugsweise stromaufwärts hiervon. Entsprechend werden die anschließenden Schritte (ii) und (iii) des erfindungsgemäßen Verfahrens mit insgesamt drei Lagen durchgeführt, die sich aus den abgewickelten Metallbändern gebildet haben. Alternativ hierzu kann vorgesehen sein, dass das Metallband, das von der dritten Coil-Abwicklungseinrichtung abgewickelt wird, mit dem in Schritt (iii) bereits gebildeten einzigen kontinuierlichen bandförmigen Verbundmaterial im warmen Zustand mit erneuter Durchführung der Schritte (ii) und (iii) verbunden wird. Für diesen Fall ist die dritte Coil-Abwicklungseinrichtung stromabwärts einer ersten Walzplattierungseinrichtung, die unmittelbar an die Zusammenführungseinrichtung angrenzt, angeordnet. Jedenfalls kann beim Einsatz von z.B. drei Coil-Abwicklungseinrichtungen ein kontinuierliches bandförmiges Verbundmaterial hergestellt werden, das z.B. in seiner obersten und untersten Lage aus Stählen mit gleichen Eigenschaftsprofilen besteht, wobei eine mittlere Lage dieses Verbundmaterials z.B. aus einem Stahl gebildet ist, der sich in seinen Eigenschaften von den für die Randlagen verwendeten Materialien unterscheidet.

In vorteilhafter Weiterbildung des erfindungsgemäßen Verfahrens wird in Schritt (iii) der Plattierungswerkstoff auf entgegengesetzten Seiten des Metallbands bestehend aus dem Grundwerkstoff aufgebracht, wobei der Plattierungswerkstoff aus dem gleichen Material besteht und von jeweils separaten Coil-Abwicklungseinrichtungen abgewickelt wird.

In vorteilhafter Weiterbildung der Erfindung kann vorgesehen sein, zwischen die zusammenzuführenden Metallbänder eine oder mehrere Zwischenschichten in fester, flüssiger oder pulverisierter Form eingebracht werden. Eine solche Zwischenschicht kann die einander gegenüberliegenden Oberflächen der Metallbänder passivieren oder aktivieren. In Folge dessen werden die Verzunderungsneigung an den Oberflächen der Metallbänder verringert, und/oder die Diffusionsvorgänge zwischen den Metallbändern in vorteilhafter Weise beeinflusst.

Die erfindungsgemäße Vorrichtung kann als RB-Anlage bezeichnet werden, wobei "RB" als Abkürzung für Roll-Bonding steht.

Weitere Vorteile der vorliegenden Erfindung bestehen aus folgenden Aspekten:
- höhere Produktionsleistung,
- bessere Wirtschaftlichkeit,
- Erweiterung der zu produzierenden Stahlsorten,
- Erzeugung von walzplattierten Grobblechen, und
- Erzeugung von walzplattierten Coils.

Nachstehend sind Ausführungsbeispiele der Erfindung anhand einer schematisch vereinfachten Zeichnung im Detail beschrieben.

### Es zeigen:

- Fig. 1: eine prinzipielle Seitenansicht einer erfindungsgemäßen Vorrichtung, bei der drei Coil-Abwicklungseinrichtungen eingesetzt werden,
- Fig. 2: eine prinzipielle Seitenansicht einer Modifikation der Zusammenführungseinrichtung, die Teil der Vorrichtung von Fig. 1 sein kann,
- Fig. 3: eine prinzipiell vereinfachte vergrößerte Ansicht einer modifizierten Coil-Abwicklungseinrichtung, die Teil der Vorrichtung von Fig. 1 sein kann, und
- Fig. 4a, 4b: Seitenansichten von Arbeitswalzen einer Walzplattierungseinrichtung, die Teil der Vorrichtung von Fig. 1 ist.

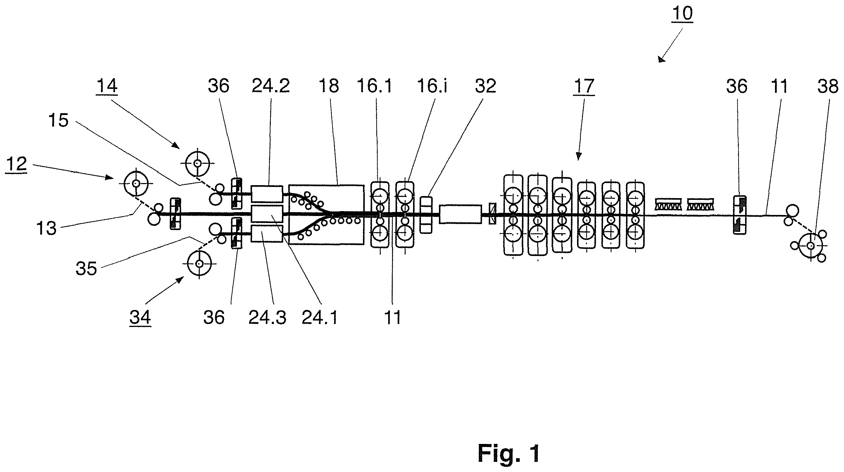

Nachstehend sind unter Bezugnahme auf die Fig. 1 bis 4 bevorzugte Ausführungsformen einer erfindungsgemäßen Vorrichtung 10 und Komponenten hiervon erläutert, wobei diese Vorrichtung 10 zur Herstellung eines Metallbands in Form eines kontinuierlichen bandförmigen Verbundmaterials 11 dient. Gleiche Merkmale in der Zeichnung sind jeweils mit gleichen Bezugszeichen versehen. An dieser Stelle wird gesondert darauf hingewiesen, dass die Zeichnung lediglich vereinfacht und insbesondere ohne Maßstab dargestellt ist.

In der Fig. 1 ist eine prinzipiell vereinfachte Seitenansicht der Vorrichtung 10 nach einer ersten Ausführungsform gezeigt.

Die Vorrichtung 10 umfasst eine erste Coil-Abwicklungseinrichtung 12, von der ein Grundwerkstoff in Form eines Metallbands 13 abgewickelt wird. Des Weiteren umfasst die Vorrichtung 10 eine zweite Coil- Abwicklungseinrichtung 14 und eine dritte Coil-Abwicklungseinrichtung 34, von denen ein Plattierungswerkstoff jeweils in Form von Metallbändern 15 bzw. 35 abgewickelt wird. Aus Fig. 1 ist ersichtlich, dass die zweite Coil-Abwicklungseinrichtung 14 und die dritte Coil-Abwicklungseinrichtung 34 auf jeweils entgegengesetzten Seiten der ersten Coil-Abwicklungseinrichtung 12 angeordnet sind. Die von den genannten Coil-Abwicklungseinrichtungen 12, 14 und 34 abgewickelten Metallbänder 13, 15 und 35 werden anschließend gemeinsam durch eine Zusammenführungseinrichtung 18 geführt und hierdurch in Richtung zueinander gebracht. Die Vorrichtung 10 umfasst weiters zumindest ein Walzgerüst 16 in Form einer Walzplattierungseinrichtung 16.1, die unmittelbar im Anschluss an die Zusammenführungseinrichtung 18 und somit stromabwärts hiervon angeordnet ist. Die Funktion dieser Walzplattierungseinrichtung 16.1 ist nachstehend noch gesondert erläutert.

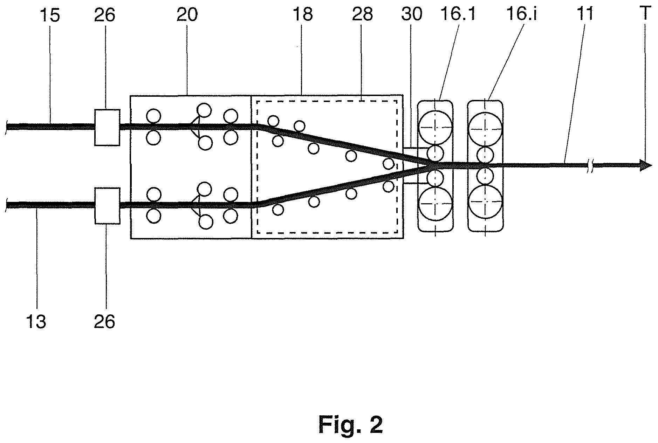

Die Zusammenführungseinrichtung 18 dient zu dem Zweck, die abgewickelten Metallbänder 13, 15 und 35 in Richtung zueinander zu bringen. Bei der in Fig. 1 dargestellten Ausführungsform kann vorgesehen sein, dass diese Metallbänder bereits innerhalb der Zusammenführungseinrichtung 18 in Kontakt miteinander gelangen. Bei einer alternativen Ausführungsform der Zusammenführungseinrichtung 18, die prinzipiell vereinfacht in der Seitenansicht von Fig. 2 gezeigt ist und Teil der Vorrichtung von Fig. 1 ist, gelangen die abgewickelten Metallbänder nicht innerhalb der Zusammenführungseinrichtung 18, sondern erst außerhalb und stromabwärts miteinander in Kontakt, wenn sie in die unmittelbar angrenzend daran positionierte Walzplattierungseinrichtung 16.1 einlaufen. Für diese alternative Zusammenführungseinrichtung 18 gemäß Fig. 2 wird an dieser Stelle darauf hingewiesen, dass in der Darstellung von Fig. 2 zur Vereinfachung nur die Metallbänder 13 und 15 gezeigt sind, wobei das Metallband 35, welches von der dritten Coil-Abwicklungseinrichtung 34 abgewickelt wird, nicht gezeigt ist.

In Fig. 2 ist mit dem Pfeil "T" eine Transportrichtung angedeutet, in der das erzeugte kontinuierliche bandförmige Verbundmaterial 11 transportiert bzw. bewegt wird (in der Zeichnungsebene von links nach rechts). Bezüglich der Darstellungen von Fig. 1 versteht sich, dass hierin das Verbundmaterial 11 in der gleichen Richtung bewegt wird, nämlich (in der Zeichnungsebene gesehen) von links nach rechts.

Die Geschwindigkeit, mit der die abgewickelten Metallbänder 13, 15 und 35 in Richtung der Zusammenführungseinrichtung 18 transportiert werden, kann jeweils gesteuert, vorzugsweise geregelt werden. Dies ist durch eine geeignete Ansteuerung eines motorischen Antriebs möglich, der jeweils für die einzelnen Coil-Abwicklungseinrichtungen 12, 14 und 34 vorgesehen sein kann. Vorzugsweise werden diese motorischen Antriebe der einzelnen Coil-Abwicklungseinrichtungen von einer gemeinsamen (nicht gezeigten) Steuereinrichtung angesteuert. Somit laufen die Metallbänder 13, 15 und 35 vorzugsweise mit der gleichen Geschwindigkeit in die Zusammenführungseinrichtung 18 ein.

Die Vorrichtung 10 umfasst Erwärmungseinrichtungen 24, die jeweils in Linie zwischen den einzelnen Coil-Abwicklungseinrichtungen 12, 14, 34 und der Zusammenführungseinrichtung 18 angeordnet sind. Im Einzelnen ist eine erste Erwärmungseinrichtung 24.1 zwischen der ersten Coil-Abwicklungseinrichtung 12 und der Zusammenführungseinrichtung 18 angeordnet. In gleicher Weise ist eine zweite Erwärmungseinrichtung 24.2 zwischen der zweiten Coil-Abwicklungseinrichtung 14 und der Zusammenführungseinrichtung 18 angeordnet, wobei eine dritte Erwärmungseinrichtung 24.3 zwischen der dritten Coil-Abwicklungseinrichtung 34 und der Zusammenführungseinrichtung 18 angeordnet ist. Die abgewickelten Metallbänder 13, 15, 35 werden durch die zugeordneten Erwärmungseinrichtungen 24.1, 24.2 und 24.3 hindurchgeführt und dabei nach dem Prinzip der Durcherwärmung erwärmt. In Folge dessen können mögliche Temperaturunterschiede zwischen den einzelnen Metallbändern, die sich z.B. in Folge von unterschiedlich langen Transportstrecken einstellen können, ausgeglichen werde. Somit treten die Metallbänder 13, 15, 35 vorzugsweise mit einer vorbestimmten Temperatur in die Zusammenführungseinrichtung 18 ein.

Die Vorrichtung 10 weist Seitenbeeinflussungseinrichtungen auf, die jeweils stromaufwärts der Zusammenführungseinrichtung 18 und in Linie mit den jeweiligen Coil-Abwicklungseinrichtungen 12, 14, 34 angeordnet sind. Diese Seitenbeeinflussungseinrichtungen sind in der Darstellung von Fig. 2 lediglich symbolisch durch das Bezugszeichen "26" angedeutet, und können beispielsweise durch Führungslineale ausgebildet sein. Entsprechend werden die abgewickelten Metallbänder durch diese Führungslineale seitlich geführt und dadurch relativ zueinander ausgerichtet. An dieser Stelle wird gesondert darauf hingewiesen, dass diese Seitenbeeinflussungseinrichtungen 26 auch innerhalb der Zusammenführungseinrichtung 18 angeordnet, und somit als Teil dieser Zusammenführungseinrichtung 18 ausgebildet sein können.

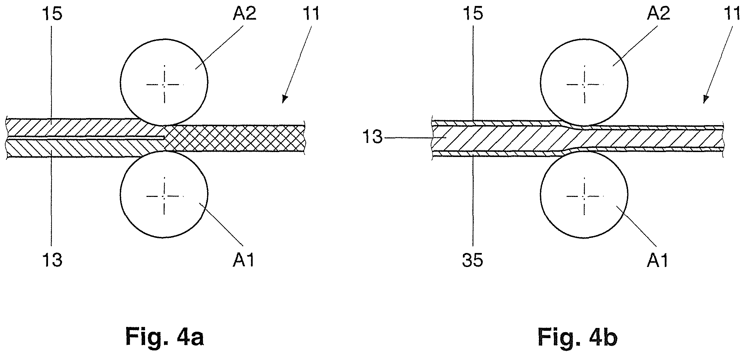

Die vorstehend bereits genannte Walzplattierungseinrichtung 16.1 dient dem Zweck, ein Warmwalzen für die Metallbänder 13, 15, 35 durchzuführen und somit hieraus mittels Walzplattieren ein kontinuierliches bandförmiges Verbundmaterial 11 zu erzeugen. Die Seitenansicht von Fig. 4b zeigt prinzipiell vereinfacht ein dreilagiges Walzschweißen von drei Materialpartnern, die z.B. aus den Metallbändern 13, 15, 35 bestehen können, wenn sie mit den Arbeitswalzen A1, A2 der Walzplattierungseinrichtung 16.1 in Kontakt gelangen und zwischen diesen Arbeitswalzen A1, A2 hindurchgeführt werden. Aus der Seitenansicht von Fig. 4b ist ersichtlich, dass aus den Metallbändern 13, 15, 35, wenn sie gemeinsam in die Walzplattierungseinrichtung 16.1 einlaufen, ein Verbund gebildet wird, der dann von den Arbeitswalzen A1, A2 der Walzplattierungseinrichtung zu dem bandförmigen Verbundmaterial 11 warmgewalzt bzw. walzplattiert wird.

Bei der Darstellung gemäß Fig. 4b dient das Metallband 13 als Grundwerkstoff, wobei die anderen beiden Metallbänder 15 und 35 als Plattierungswerkstoff dienen, der jeweils an entgegengesetzten Seiten des Metallbands 13 aufplattiert wird. Diesbezüglich wird darauf hingewiesen, dass für den Grundwerkstoff (in Form des Metallbands 13) einerseits, und für den Plattierungswerkstoff (in Form der Metallbänder 15, 35) andererseits, jeweils unterschiedliche Material- bzw. Stahlgüten verwendet werden können. Der für die Metallbänder 15, 35 verwendete Plattierungswerkstoff kann entweder aus dem gleichen Material bestehen, oder alternativ jeweils aus unterschiedlichen Stahlgüten bestehen. Des Weiteren wird darauf hingewiesen, dass - abweichend von der Darstellung in Fig. 4b - die beiden Metallbänder 15, 35 auch auf der gleichen Seite des Metallbands 13 aufgebracht bzw. aufplattiert werden können.

Im Anschluss an die Walzplattierungseinrichtung 16.1 bzw. stromabwärts hiervon können weitere Walzgerüste bzw. Walzplattierungseinrichtungen vorgesehen sein, mit denen ein Warmwalzen für das bandförmige Verbundmaterial 11 durchgeführt wird. In der Fig. 1 ist durch das Bezugszeichen "16.i" angedeutet, dass stromabwärts der Walzplattierungseinrichtung 16.1 zumindest eine weitere Walzplattierungseinrichtung oder mehrere solcher Walzgerüste in der Walzstraße 17 angeordnet sein können. Des Weiteren können im Anschluss an die Walzplattierungseinrichtungen 16.i weitere Walzgerüste in der Walzstraße 17 vorgesehen sein.

Die Vorrichtung 10 umfasst - ausweislich der Darstellung in Fig. 2 - eine Reinigungseinrichtung in Form einer Entzunderungseinrichtung 20, die stromaufwärts der Zusammenführungseinrichtung 18 angeordnet ist. Durch diese Entzunderungseinrichtung 20 werden die Metallbänder 13, 15, 35 geeignet entzundert, was insbesondere deshalb von Vorteil ist, weil diese Metallbänder jeweils aus Stahl oder aus einer Stahl-Legierung bestehen. Des Weiteren verdeutlicht die Seitenansicht von Fig. 2, dass die Vorrichtung 10 eine Schutzgas-Einrichtung 28 umfasst, die in die Zusammenführungseinrichtung 18 integriert ist. In der Darstellung von Fig. 2 ist die Schutzgas-Einrichtung 28 lediglich vereinfacht durch gestrichelte Linien symbolisiert. Die Metallbänder 13, 15, 35 werden, bevor sie durch die Walzplattierungseinrichtung 16.1 mittels Warmwalzen bzw. Walzplattieren miteinander verbunden werden, durch die Schutzgas-Einrichtung 28 hindurchgeführt, was die Bildung von "frischem" Zunder auf den einander gegenüberliegenden Oberflächen dieser Metallbänder 13, 15, 35 wirkungsvoll reduziert.

Das Verbinden der abgewickelten Metallbänder 13, 15, 35 mittels des Warmwalzens in Schritt (iii) kann weiter dadurch verbessert werden, dass eine Oberflächentemperatur von zumindest einem dieser Materialpartner an deren jeweils gegenüberliegenden Seiten beeinflusst, vorzugsweise erhöht wird. Zu diesem Zweck ist unmittelbar stromaufwärts der Walzplattierungseinrichtung 16.1 eine Temperaturbeeinflussungseinrichtung 30 angeordnet, die in der Darstellung von Fig. 2 symbolisch vereinfacht gezeigt ist.

Die Vorrichtung umfasst des Weiteren zumindest eine Messeinrichtung 32, mit der die Materialbeschaffenheit des kontinuierlichen bandförmigen Verbundmaterials 11, das mittels Warmwalzen durch die Walzplattierungseinrichtung 16.1 erzeugt worden ist, erfasst werden kann. Die Messeinrichtung 32 ist z.B. hinter bzw. stromabwärts der Walzplattierungseinrichtung 16.1 angeordnet, und funktioniert vorzugsweise nach dem Prinzip Röntgen und/oder Ultraschall. Hierzu kann vorgesehen sein, zugehörige Sensoren der Messeinrichtung 32 oberhalb und/oder unterhalb des kontinuierlichen bandförmigen Verbundmaterials 11 anzuordnen, so dass damit eine Oberseite und/oder eine Unterseite des Metallbands in Form dieses Verbundmaterials 11 hinsichtlich seiner Materialbeschaffenheit bzw. Oberflächenqualität untersucht werden kann.

An verschiedenen Stellen entlang der Prozesslinie der Vorrichtung 10 sind Trenneinrichtungen 36, z.B. in Form von Pendel- oder Trommelscheren oder dergleichen, angeordnet. Diese Trenneinrichtungen 36 ermöglichen ein Herausschneiden bzw. Austragen von nicht verwertbarem Material. Ergänzend und/oder alternativ kann mit Einsatz dieser Trenneinrichtungen 36 auch ein diskontinuierlicher Walzbetrieb von Einzelbändern und/oder ein Notfall-Betrieb mit nur einer der Coil-Abwicklungseinrichtungen 12, 14, 34 realisiert werden. Das Trennen kann auch mit dem Ziel der Verbesserung der nachfolgenden Prozessschritte und/oder zur Erzeugung der Längen des in dieser Anlage erzeugten Endproduktes erfolgen. Diesbezüglich wird darauf hingewiesen, dass die in der Fig. 1 gezeigten Positionen der jeweiligen Trenneinrichtungen 36 lediglich beispielhaft zu verstehen sind.

Die Vorrichtung 10 kann auch eine Walzstrasse 17 umfassen, mit der das erzeugte kontinuierliche bandförmige Verbundmaterial 11 auf geringere Dicken ausgewalzt werden kann.

Am Ende der Walzstraße 17 ist zumindest eine Haspel 38 vorgesehen, um das erzeugte kontinuierliche bandförmige Verbundmaterial 11 zu einem Coil aufzuwickeln. Zweckmäßigerweise kann auch eine Mehrzahl von solchen Haspeln 38 vorgesehen sein, mit entsprechenden (nicht gezeigten) Einrichtungen für ein Umschalten zwischen den einzelnen Haspeln 38. Ergänzend und/oder alternativ kann am Ende der Walzstrasse 17 auch zumindest eine Ablage oder dergleichen vorgesehen sein, um davon Bleche bzw. Grobbleche zu entnehmen.

Die Vorrichtung 10 gemäß Fig. 1 kann dahingehend modifiziert werden, dass insgesamt nur zwei Coil-Abwicklungseinrichtungen zum Einsatz kommen, z.B. die erste Coil-Abwicklungseinrichtung 12 und die zweite Coil-Abwicklungseinrichtung 14. Ein Zusammenführen der hiervon abgewickelten Metallbänder 13, 15 und das anschließende Warmwalzen zu einem einzigen kontinuierlichen bandförmigen Verbundmaterial 11 entspricht dann der Darstellung gemäß Fig. 2. Ergänzend wird für eine solche Modifikation der Vorrichtung 10 darauf hingewiesen, dass ein Zusammenfügen von z.B. nur zwei Materialpartnern, die aus dem Metallband 13 und dem Metallband 15 bestehen können, in der vereinfachten Seitenansicht von Fig. 4a gezeigt ist.

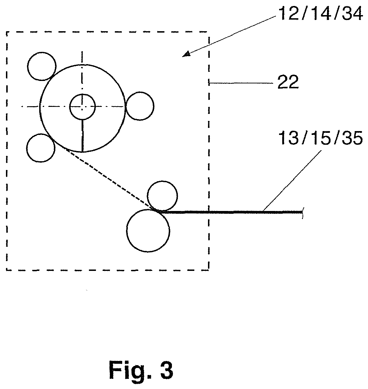

Eine weitere Modifikation der Vorrichtung 10 gemäß Fig. 1 kann in der Weise erfolgen, dass zumindest eine der Coil-Abwicklungseinrichtungen 12, 14, 34 in einer beheizbaren Kammer 22 aufgenommen ist. Dies ist vereinfacht in der Darstellung von Fig. 3 gezeigt. Durch eine solche Aufnahme einer Coil-Abwicklungseinrichtung 12, 14, 34 in der beheizbaren Kammer 22 ist gewährleistet, dass ein hiervon abgewickeltes Metallband 13, 15, 35 bereits eine vorbestimmte Temperatur aufweist, im Hinblick auf ein Zusammenführen der einzelnen Metallbänder 13, 15, 35 und das anschließende Warmwalzen zu einem einzigen kontinuierlichen bandförmigen Verbundmaterial 11. Vorzugsweise sind alle der Coil-Abwicklungseinrichtungen 12, 14, 34 in einer jeweils separaten beheizbaren Kammer 22 aufgenommen.

Mit den vorstehend erläuterten Ausführungsformen der erfindungsgemäßen Vorrichtung 10 kann das erfindungsgemäße Verfahren zur Herstellung des kontinuierlichen bandförmigen Verbundmaterials 11 durchgeführt werden. Dieses Verfahren kann in Abhängigkeit von zumindest einer der eingangs genannten Prozessgrößen automatisch, und vorzugsweise geregelt, durchgeführt werden.

### Bezugszeichenliste

- 10: Vorrichtung
- 11: kontinuierliches bandförmiges Verbundmaterial
- 12: erste Coil-Abwicklungseinrichtung
- 13: Metallband (das von der ersten Coil-Abwicklungseinrichtung 12 abgewickelt wird)
- 14: zweite Coil-Abwicklungseinrichtung
- 15: Metallband (das von der zweiten Coil-Abwicklungseinrichtung 14 abgewickelt wird)
- 16.1: Walzplattierungseinrichtung
- 16.i: (weitere) Walzplattierungseinrichtung(en)
- 17: Walzstraße
- 18: Zusammenführungseinrichtung
- 20: Reinigungseinrichtung (z.B. Entzunderungseinrichtung)
- 22: (beheizbare) Kammer (zur Aufnahme einer Coil-Abwicklungseinrichtung)
- 24.1: erste Erwärmungseinrichtung (z.B. Induktionsheizung)
- 24.2: zweite Erwärmungseinrichtung (z.B. Induktionsheizung)
- 24.3: dritte Erwärmungseinrichtung (z.B. Induktionsheizung)
- 26: Seitenbeeinflussungseinrichtung (z.B. Führungslineal)
- 28: Schutzgas-Einrichtung
- 30: Temperaturbeeinflussungseinrichtung
- 32: Messeinrichtung
- 34: dritte Coil-Abwicklungseinrichtung
- 35: Metallband (das von der dritten Coil-Abwicklungseinrichtung 34 abgewickelt wird)
- 36: Trenneinrichtung (z.B. Trommelschere)
- 38: Haspel
- A1, A2: Arbeitswalzen (der Walzplattierungseinrichtung 16.1)
- T: Transportrichtung (für das bandförmige Verbundmaterial 11)

## Patentansprüche

1. Verfahren zur Herstellung eines kontinuierlichen bandförmigen Verbundmaterials (11), aufweisend die Schritte:
(i) Bereitstellen eines Grundwerkstoffs aus Metall, der in Form eines aus Stahl oder aus einer Stahl-Legierung gebildeten Metallbands (13) von einer ersten Coil-Abwicklungseinrichtung (12) abgewickelt wird, und Bereitstellen zumindest eines Plattierungswerkstoffs aus Metall, der in Form eines aus Stahl oder aus einer Stahl-Legierung gebildeten Metallbands (15) von einer zweiten Coil-Abwicklungseinrichtung (14) abgewickelt wird,
(ii) Zusammenführen des von der ersten Coil-Abwicklungseinrichtung (12) abgewickelten Metallbands (13) und des von der zweiten Coil-Abwicklungseinrichtung (14) abgewickelten Metallbands (15), und
(iii) Walzen der in Richtung zueinander gebrachten abgewickelten Metallbänder (13, 15), so dass damit durch Walzplattieren ein einziges kontinuierliches bandförmiges Verbundmaterial (11) bestehend aus dem Grundwerkstoff und dem Plattierungswerkstoff gebildet wird,
wobei die von einer jeweiligen Coil-Abwicklungseinrichtung (12, 14, 34) abgewickelten Metallbänder (13, 15, 35) vor dem Schritt (ii) durch Verwendung von Hochdruck-Wasser entzundert werden und das Walzen der Metallbänder (13, 15) in Schritt (iii) als ein Warmwalzen ausgeführt wird, **dadurch gekennzeichnet,**
**dass** die erste Coil-Abwicklungseinrichtung (12) und die zweite Coil-Abwicklungseinrichtung (14) während des Schritts (i) in einer beheizbaren Umgebung (22) unter Schutzgasatmosphäre aufgenommen sind, so dass vor den Schritten (ii) und (iii) für die von den Coil-Abwicklungseinrichtungen (12, 14) abgewickelten Metallbänder (13, 15) eine vorbestimmte Temperatur von zumindest 720°C eingestellt wird,
**dass** das Zusammenführen der Metallbänder (13, 15) in Schritt (ii) im warmen Zustand erfolgt, bei dem diese Metallbänder (13, 15) jeweils eine Temperatur von zumindest 720°C aufweisen,
**dass** vor dem Schritt (iii) die Oberflächentemperatur aller Metallbänder (13, 15, 35) an den einander gegenüberliegenden Oberflächen hiervon durch Verwendung einer Induktionsheizung erhöht wird, und
**dass** während des Schritts (ii) und vor dem Schritt (iii) die von einer jeweiligen Coil-Abwicklungseinrichtung (12, 14, 34) abgewickelten Metallbänder (13, 15, 35) in einer Schutzgas-Atmosphäre (28) geführt werden.

2. Verfahren nach Anspruch 1, **dadurch gekennzeichnet, dass** vor dem Schritt (ii) und/oder während des Schritts (ii) und/oder vor dem Schritt (iii) die Metallbänder (13, 15) auf eine Temperatur oberhalb der Rekristallisationsgrenze erwärmt werden, vorzugsweise, dass diese Erwärmung mittels einer weiteren Induktionsheizung (24.1, 24.2, 24.3) durchgeführt wird.

3. Verfahren nach einem der vorhergehenden Ansprüche, **dadurch gekennzeichnet, dass** in Schritt (iii) der Plattierungswerkstoff (15) auf entgegengesetzten Seiten des Metallbands (13) bestehend aus dem Grundwerkstoff aufgebracht wird, wobei der Plattierungswerkstoff jeweils aus dem gleichen Material besteht und in Schritt (i) von jeweils separaten Coil-Abwicklungseinrichtungen (14, 34) abgewickelt wird.

4. Verfahren nach einem der vorhergehenden Ansprüche, **dadurch gekennzeichnet, dass** der Grundwerkstoff und der zumindest eine Plattierungswerkstoff aus jeweils unterschiedlichen Stahlgüten bestehen, wobei in Schritt (i) ein weiterer Plattierungswerkstoff in Form eines Metallbandes (35) von einer dritten Coil-Abwicklungseinrichtung (34) abgewickelt wird und die anschließenden Schritte (ii) und (iii) mit insgesamt drei Lagen, die aus den von den jeweiligen Coil-Abwicklungseinrichtungen (12, 14, 34) abgewikkelten Metallbändern (13, 15, 35) gebildet sind, durchgeführt werden.

5. Verfahren nach Anspruch 4, **dadurch gekennzeichnet, dass** die jeweils aus dem Plattierungswerkstoff bestehenden Metallbänder (15, 35) aus jeweils unterschiedlichen Materialien gebildet sind, wobei diese Metallbänder (15, 35) entweder auf entgegengesetzten Seiten des Metallbands (13) bestehend aus dem Grundwerkstoff oder auf der gleichen Seite davon aufgebracht werden.

6. Verfahren nach einem der vorhergehenden Ansprüche, **dadurch gekennzeichnet, dass** während des Schritts (i) und/oder vor dem Schritt (ii) und/oder während des Schritts (ii) und/oder vor dem Schritt (iii) die von den Coil-Abwicklungseinrichtungen (12, 14, 34) abgewickelten Metallbänder (13, 15, 35) seitlich geführt werden, um dadurch die jeweiligen Metallbänder (13, 15, 35) zueinander auszurichten, vorzugsweise, dass zur seitlichen Führung zumindest eine Seitenbeeinflussungseinrichtung (26) in Form eines Führungslineals vorgesehen ist, das durch einen Aktuator insbesondere mit einer vorbestimmten Kraft in Richtung der Bandmitte bewegt wird.

7. Verfahren nach einem der vorhergehenden Ansprüche, **dadurch gekennzeichnet, dass** während des Schritts (iii) die von einer jeweiligen Coil-Abwicklungseinrichtung (12, 14, 34) abgewickelten Metallbänder (13, 15, 35), in einer Schutzgas-Atmosphäre (28) geführt werden.

8. Verfahren nach einem der vorhergehenden Ansprüche, **dadurch gekennzeichnet, dass** im Anschluss an den Schritt (iii) eine Materialbeschaffenheit des erzeugten einzigen kontinuierlichen bandförmigen Verbundmaterials (11) insbesondere durch Röntgen und/oder Ultraschall erfasst wird, vorzugsweise, dass auf Grundlage der erfassten Materialbeschaffenheit durch eine Steuereinrichtung ein Prozesssignal erzeugt wird, mit dem für das Verfahren ein Regelkreis gebildet wird.

9. Verfahren nach einem der vorhergehenden Ansprüche, **dadurch gekennzeichnet, dass** dieses Verfahren automatisch in Abhängigkeit von zumindest einer vorbestimmten Prozessgröße durchgeführt wird, vorzugsweise, dass diese Prozessgröße gewählt ist aus der Gruppe gebildet aus insbesondere der vor dem Schritt (ii) vorliegenden Geschwindigkeit der von den Coil-Abwicklungseinrichtungen (12, 14, 34) abgewickelten Metallbänder (13, 15, 35), einem Temperaturunterschied der Metallbänder (13, 15, 35) vor dem Schritt (ii) und/oder vor dem Schritt (iii), den unterschiedlichen Materialeigenschaften und dem Dickenverhältnis der eingesetzten Materialpartner bzw. Metallbänder, einer jeweiligen Geschwindigkeit der Arbeitswalzen (A1, A2) der Walzplattierungseinrichtung (16.1; 16.i) und/oder einer in Schritt (iii) erzielten Dickenreduzierung des einzigen kontinuierlichen bandförmigen Verbundmaterials (11).

10. Verfahren nach einem der vorhergehenden Ansprüche, **dadurch gekennzeichnet, dass** zwischen die zusammenzuführenden Metallbänder (13, 15) zumindest eine Zwischenschicht in fester, flüssiger oder pulverisierter Form eingebracht wird, welche die einander gegenüberliegenden Oberflächen der Metallbänder (13, 15) passiviert oder aktiviert.

11. Vorrichtung (10) zur Herstellung eines kontinuierlichen bandförmigen Verbundmaterials (11), umfassend
zumindest eine erste Coil-Abwicklungseinrichtung (12), mit der ein aus Stahl oder aus einer Stahl-Legierung gebildetes Metallband (13) bereitgestellt wird, das als Grundwerkstoff dient,
zumindest eine zweite Coil- Abwicklungseinrichtung (14), mit der ein aus Stahl oder aus einer Stahl-Legierung gebildetes Metallband (15) bereitgestellt wird, das als Plattierungswerkstoff dient,
zumindest ein Walzwerk (16) in Form einer Walzplattierungseinrichtung (16.1), die in Linie mit der ersten und zweiten Coil-Abwicklungseinrichtung (12, 14) und jeweils stromabwärts hiervon angeordnet ist, und
eine zwischen einerseits den Coil-Abwicklungseinrichtungen (12, 14, 34) und andererseits der Walzplattierungseinrichtung (16.1) angeordnete Zusammenführungseinrichtung (18),
zumindest eine Reinigungseinrichtung (20) in Form einer Hochdruckwasser-Entzunderungseinrichtung, die zwischen einerseits den Coil-Abwicklungseinrichtungen (12, 14) und andererseits der Zusammenführungseinrichtung (18) angeordnet ist und mittels der die von den Coil-Abwicklungseinrichtungen (12, 14) abgewickelten Metallbänder (13, 15) entzunderbar sind, **dadurch gekennzeichnet,**
**dass** die erste und zweite Coil-Abwicklungseinrichtung (12, 14) in zumindest einer beheizbaren Kammer (22) unter Schutzgasatmosphäre aufgenommen sind, wobei die von den Coil-Abwicklungseinrichtungen (12, 14) abgewickelten Metallbänder (13, 15) mittels der Zusammenführungseinrichtung (18) im warmen Zustand in Richtung zueinander bringbar sind,
**dass** zwischen der Zusammenführungseinrichtung (18) und der unmittelbar stromabwärts davon angeordneten Walzplattierungseinrichtung (16.1) zumindest eine Temperaturbeeinflussungseinrichtung (30) in Form einer Induktionsheizung vorgesehen ist, mittels der die von den jeweiligen Coil-Abwicklungseinrichtungen (12, 14) abgewickelten Metallbänder (13, 15) an ihren einander gegenüberliegenden Oberflächen erwärmbar sind, so dass eine Anordnung von Materialpartnern gebildet aus den von den Coil-Abwicklungseinrichtungen (12, 14) abgewickelten Metallbändern (13, 15) in der Walzplattierungseinrichtung (16.1) warmwalzbar ist und damit durch Walzplattieren ein einziges kontinuierliches bandförmiges Verbundmaterial (11) bestehend aus dem Grundwerkstoff und dem Plattierungswerkstoff entsteht, und
**dass** eine Schutzgas-Einrichtung (28) als Teil der Zusammenführungseinrichtung (18) vorgesehen ist, wobei die von den jeweiligen Coil-Abwicklungseinrichtungen (12, 14) abgewickelten Metallbänder (13, 15) innerhalb der Schutzgas-Einrichtung (28) in einer Schutzgas-Atmosphäre geführt sind.

12. Vorrichtung (10) nach Anspruch 11, **dadurch gekennzeichnet, dass** zumindest eine Coil-Abwicklungseinrichtung (12, 14) eine Schnellwechseleinrichtung aufweist, mittels der ein Austauschen von Coils möglich ist, vorzugsweise, dass die Schnellwechseleinrichtung eine Schweißeinrichtung umfasst, um aufeinander folgende Metallbänder (13, 15) miteinander zu verschweißen.

13. Vorrichtung (10) nach Anspruch 11 oder 12, **dadurch gekennzeichnet, dass** zumindest eine Coil-Abwicklungseinrichtung (12; 14) eine Mehrzahl von Abwickelmodulen aufweist, die nacheinander in eine Abwickelposition bringbar sind, vorzugsweise, dass diese Coil-Abwicklungseinrichtung (12; 14) eine Schweißeinrichtung umfasst, um aufeinander folgende Metallbänder (13, 15) miteinander zu verschweißen.

14. Vorrichtung (10) nach einem der Ansprüche 11 bis 13, **dadurch gekennzeichnet, dass** stromaufwärts der Zusammenführungseinrichtung (18) und/oder als Teil hiervon zumindest eine Erwärmungseinrichtung (24) vorgesehen ist, wobei die von den Coil-Abwicklungseinrichtungen (12, 14) abgewickelten Metallbänder (13, 15) durch diese Erwärmungseinrichtung (24) hindurch geführt sind, vorzugsweise, dass die zumindest eine Erwärmungseinrichtung (24) nach dem Prinzip einer weiteren Induktionsheizung (24.1, 24.2, 24.3) funktioniert, weiter vorzugsweise, dass für die abgewickelten Metallbänder (13, 15) jeweils eine separate Erwärmungseinrichtung (24) vorgesehen ist.

15. Vorrichtung (10) nach einem der Ansprüche 11 bis 14, **dadurch gekennzeichnet, dass** zumindest eine Seitenbeeinflussungseinrichtung (26) vorgesehen ist, die stromaufwärts der Zusammenführungseinrichtung (18) oder als Teil dessen und/oder stromaufwärts der Walzplattierungseinrichtung (16.1) angeordnet ist, wobei die von den Coil-Abwicklungseinrichtungen (12, 14) abgewickelten Metallbänder (13, 15) an ihren Seitenrändern in Kontakt mit der Seitenbeeinflussungseinrichtung (26) bringbar sind, um seitlich zueinander ausgerichtet zu werden, vorzugsweise, dass die zumindest eine Seitenbeeinflussungseinrichtung (26) in Form eines Führungslineals ausgebildet ist, das insbesondere mit einer vorbestimmten Kraft in Richtung der Bandmitte bewegbar ist.

16. Vorrichtung (10) nach einem der Ansprüche 11 bis 15, **gekennzeichnet durch** eine Schutzgas-Einrichtung (28), die als Teil einer stromabwärts unmittelbar angrenzend die Zusammenführungseinrichtung (18) angeordneten Walzplattierungseinrichtung (16.1) vorgesehen ist, wobei die von den jeweiligen Coil-Abwicklungseinrichtungen (12, 14) abgewickelten Metallbänder (13, 15) innerhalb der Schutzgas-Einrichtung (28) in einer Schutzgas-Atmosphäre geführt sind.

17. Vorrichtung (10) nach einem der Ansprüche 11 bis 16, **dadurch gekennzeichnet, dass** stromabwärts einer Walzplattierungseinrichtung (16.1) eine Messeinrichtung (32) vorgesehen ist, mittels der eine Materialbeschaffenheit des erzeugten einzigen kontinuierlichen bandförmigen Verbundmaterials (11) insbesondere durch Röntgen und/oder Ultraschall erfassbar ist.

18. Vorrichtung (10) nach einem der Ansprüche 11 bis 17, **dadurch gekennzeichnet, dass** eine dritte Coil-Abwicklungseinrichtung (34) vorgesehen ist, die in Linie mit der Walzplattierungseinrichtung (16.1) angeordnet ist und mit der ein weiteres Metallband (35) als Plattierungswerkstoff bereitgestellt wird.

## Claims

1. Method of producing a continuous strip-shaped composite material (11), comprising the steps of:
(i) providing a base material of metal which is unwound in the form of a metal strip (13), which is formed from steel or a steel alloy, from a first coil unwinding device (12) and providing at least one cladding material of metal which is unwound in the form of a metal strip (15), which is formed from steel or a steel alloy, from a second coil unwinding device (14),
(ii) bringing together the metal strip (13) unwound from the first coil unwinding device (12) and the metal strip (15) unwound from the second coil unwinding device (14), and
(iii) rolling the metal strips (13, 15), which have been brought towards one another in direction, so that a single continuous strip-shaped composite material (11) consisting of the base material and the cladding material is thereby formed by roll-bonding,
wherein prior to step (ii) the metal strips (13, 15, 35) unwound from a respective coil unwinding device (12, 14, 34) are descaled through use of high-pressure water and the rolling of the metal strips (13, 15) is executed in step (iii) as hot rolling,
**characterised in that**
the first coil unwinding device (12) and the second coil unwinding device (14) are received during the step (i) in a heatable environment (22) under a protective gas atmosphere so that prior to the steps (ii) and (iii) a predetermined temperature of at least 720° C is set for the metal strips (13, 15) unwound from the coil unwinding devices (12, 14),
the bringing together of the metal strips (13, 15) in step (ii) is carried out in the hot state in which these metal strips (13, 15) each have a temperature of at least 720° C,
prior to the step (iii) the surface temperature of all metal strips (13, 15, 35) at the mutually opposite surfaces thereof is increased by use of induction heating means and
during the step (ii) and prior to the step (iii) the metal strips (13, 15, 35) unwound from each coil unwinding device (12, 14, 34) are conducted in a protective gas atmosphere (28).

2. Method according to claim 1, **characterised in that** prior to the step (ii) and/or during the step (ii) and/or prior to the step (iii) the metal strips (13, 15) are heated to a temperature above the recrystalisaton limit, preferably **in that** this heating is carried by way of a further induction heating means (24.1, 24.2, 24.3).

3. Method according to one of the preceding claims, **characterised in that** in step (iii) the cladding material (15) is applied to opposite sides of the metal strip (13) consisting of the base material, wherein the cladding material respectively consists of the same material and in step (i) is unwound from respective separate coil unwinding devices (14, 34).

4. Method according to one of the preceding claims, **characterised in that** the base material and the at least one cladding material respectively consist of different steel qualities, wherein in step (i) a further cladding material in the form of a metal strip (35) is unwound from a third coil unwinding device (34) and the subsequent steps (ii) and (iii) are carried out with in total three layers which are formed from the metal strips (13, 15, 35) unwound from the respective coil unwinding devices (12, 14, 34).

5. Method according to claim 4, **characterised in that** the metal strips (15, 35) each consisting of the cladding material are formed from respectively different materials, wherein these metal strips (15, 35) are applied either on opposite sides of the metal strip (13) consisting of the base material or on the same side thereof.

6. Method according to any one of the preceding claims, **characterised in that** during the step (i) and/or prior to the step (ii) and/or during the step (ii) and/or prior to the step (iii) the metal strips (13, 15, 35) unwound from the coil unwinding devices (12, 14, 34) are laterally guided so as to thereby align the respective metal strips (13, 15, 35) relative to one another, preferably **in that** for lateral guidance at least one side influencing device (26) in the form of a guidance straight guide, which is moved in the direction of the strip centre by an actuator particularly with a predetermined force, is provided.

7. Method according to any one of the preceding claims, **characterised in that** during the step (iii) the metal strips (13, 15, 35) unwound from a respective coil unwinding device (12, 14, 34) are conducted in a protective gas atmosphere (28).

8. Method according to any one of the preceding claims, **characterised in that** subsequently to the step (iii) a material property of the produced single continuous strip-shaped composite material (11) is detected by, in particular, X-rays and/or ultrasound, preferably **in that** on the basis of the detected material property a process signal, by which a regulating circuit for the method is formed, is generated by a control device.

9. Method according to one of the preceding claims, **characterised in that** this method is carried out automatically in dependence on at least one predetermined process variable, preferably **in that** this process variable is selected from the group formed from, in particular, the speed, which is present prior to the step (ii), of the metal strips (13, 15, 35) unwound from the coil unwinding devices (12, 14, 34), a temperature difference of the metal strips (13, 15, 35) prior to the step (ii) and/or prior to the step (iii), the different material characteristics and the thickness ratio of the material partners or material strips used, a respective speed of the work rolls (A1, A2) of the roll-bonding device (16.1; 16.i) and/or a thickness reduction, which is achieved in step (iii), of the single-continuous strip-shaped composite material (11).

10. Method according to any one of the preceding claims, **characterised in that** at least one intermediate layer in solid, liquid or powdered form, which passivates or activates the mutually opposite surfaces of the metal strips (13, 15), is introduced between the metal strips (13, 15) being brought together.

11. Device (10) for producing a continuous strip-shaped composite material (11), comprising
at least one first coil unwinding device (12), by which a metal strip (13) formed from steel or a steel alloy and serving as base material is provided,
at least one second coil unwinding device (14), by which a metal strip (15) formed from steel or a steel alloy and serving as cladding material is provided;
at least one rolling mill (16) in the form of a roll-bonding device (16.1), which is arranged in line with the first and second coil unwinding devices (12, 14) and respectively downstream thereof,
a bringing-together device (18) arranged between the coil unwinding devices (12, 14, 34) on the one hand and the roll-bonding device (16.1) on the other hand, and
at least one cleaning device (20) in the form of a high-pressure water descaling device which is arranged between the coil unwinding devices (12, 14) on the one hand and the bringing-together device (18) on the other hand and by means of which the metal strips (13, 15) unwound from the coil unwinding devices (12,14) can be descaled,
**characterised in that**
the first and second coil unwinding devices (12, 14) are received in at least one heatable chamber (22) under a protective gas atmosphere, wherein the metal strips (13, 15) unwound from the coil unwinding devices (12, 15) can be brought in hot state in direction towards one another by means of the bringing-together device (18),
provided between the bringing-together device (18) and the roll-bonding device (16.1) arranged directly downstream thereof is at least one temperature-influencing device (30) in the form of an induction heating means, by means of which the metal strips (13, 15) unwound form the respective coil unwinding devices (12, 14) are heatable at their mutually opposite surfaces so that an arrangement of material partners formed from the metal strips (13, 15) unwound from the coil unwinding devices (12, 14) can be subjected to hot rolling in the roll-bonding device (16.1) and thus a continuous strip-shaped composite material (11) consisting of the base material and the cladding material arises through roll-bonding, and
a protective gas device (28) is provided as part of the bringing-together device (18), wherein the metal strips (13, 15) unwound from the respective coil unwinding devices (12, 14) are conducted in a protective gas atmosphere within the protective gas device (28).

12. Device (10) according to claim 11, **characterised in that** at least one coil unwinding device (12, 14) comprises a quick-change device by means of which an exchange of coils is possible, preferably **in that** the quick-change device comprises a welding device in order to weld together successive metal strips (13, 15).

13. Device (10) according to claim 11 or 12, **characterised in that** at least one coil unwinding device (12; 14) comprises a plurality of unwinding modules which can be brought in succession into an unwinding position, preferably **in that** this coil unwinding device (12; 14) comprises a welding device in order to weld together successive metal strips (13, 15).

14. Device (10) according to any one of claims 11 to 13, **characterised in that** at least one heating device (24) is provided upstream of the bringing-together device (18) and/or as part thereof, wherein the metal strips (13, 15) unwound from the coil unwinding devices (12, 14) are led through this heating device (24), preferably **in that** the at least one heating device (24) functions according to the principle of a further induction heating means (24.1, 24.2, 24.3), more preferably **in that** a respective separate heating device (24) is provided for the unwound metal strips (13, 15).

15. Device (10) according to any one of claims 11 to 14, **characterised in that** at least one side influencing device (26) is provided, which is arranged upstream of the bringing-together device (18) or as part thereof and/or upstream of the roll-bonding device (16.1), wherein the metal strips (13, 15) unwound from the coil unwinding devices (12, 14) can be brought at the side edges thereof into contact with the side influencing device (26) so as to be laterally aligned relative to one another, preferably **in that** the at least one side influencing device (26) is constructed in the form of a guidance straight guide which is movable in the direction of the strip centre with, in particular, a predetermined force.

16. Device (10) according to any one of claims 11 to 15, **characterised by** a protective gas device (28) which is provided as part of a roll-bonding device (16.1) arranged downstream directly adjacent to the bringing-together device (18), wherein the metal strips (13, 15) unwound from the respective coil unwinding devices (12, 14) or are guided within this protective gas device (28) in a protective gas atmosphere.

17. Device (10) according to any one of claims 11 to 16, **characterised in that** provided downstream of a roll-bonding device (16.1) is a measuring device (32) by means of which a material property of the produced single continuous strip-shaped composite material (11) is detectable particularly by X-rays and/or ultrasound.

18. Device (10) according to any one of claims 11 to 17, **characterised in that** a third coil unwinding device (34) is provided, which is arranged in line with the roll-bonding device (16.1) and by which a further metal strip 935) as cladding material is provided.

## Revendications

1. Procédé pour la fabrication d'un matériau composite continu (11) sous la forme d'une bande, présentant les étapes dans lesquelles :
(i) on procure un matériau de base constitué de métal qui est déroulé à partir d'un premier mécanisme de déroulement de bobine (12) sous la forme d'une bande métallique (13) réalisée en acier ou réalisée à partir d'un alliage à base d'acier, et on procure au moins un matériau de placage constitué de métal qui est déroulé à partir d'un deuxième mécanisme de déroulement de bobine (14) sous la forme d'une bande métallique (15) réalisée en acier ou réalisée à partir d'un alliage à base d'acier ;
(ii) on guide de manière conjointe la bande métallique (13) qui a été déroulée à partir du premier mécanisme de déroulement de bobine (12) et la bande métallique (15) qui a été déroulée à partir du deuxième mécanisme de déroulement de bobine (14) ; et
(iii) on soumet à un laminage les bandes métalliques qui ont été déroulées (13, 15) et qui ont été amenées dans la direction l'une de l'autre, d'une manière telle que l'on obtient en l'occurrence, à l'intervention d'un laminage-placage, un matériau composite continu individuel (11) sous la forme d'une bande, constitué par le matériau de base et par le matériau de placage ;
dans lequel les bandes métalliques (13, 15, 35), qui ont été déroulées à partir d'un mécanisme respectif de déroulement de bobine (12, 14, 34), sont soumises, avant l'étape (ii), à un décalaminage en utilisant de l'eau sous haute pression et le laminage des bandes métalliques (13, 15) à l'étape (iii) est mis en œuvre sous la forme d'un laminage à chaud ; **caractérisé**
**en ce que** le premier mécanisme de déroulement de bobine (12) et le deuxième mécanisme de déroulement de bobine (14), au cours de l'étape (i), sont logés sous l'atmosphère d'un gaz de protection dans un environnement (22) qui peut être chauffé, d'une manière telle que, avant les étapes (ii) et (iii), on règle une température prédéfinie d'au moins 720 °C pour les bandes métalliques (13, 15), qui ont été déroulées à partir des mécanismes de déroulement de bobine (12, 14) ;
**en ce que** le guidage des bandes métalliques (13, 15) de manière conjointe à l'étape (ii) a lieu à l'état chaud dans lequel ces bandes métalliques (13, 15) présentent respectivement une température d'au moins 720 °C;
**en ce que**, avant l'étape (iii), on élève la température superficielle de toutes les bandes métalliques (13, 15, 35) en vigueur aux surfaces de ces dernières, opposées l'une à l'autre, en utilisant un chauffage du type à induction ; et
**en ce que**, au cours de l'étape (ii) et avant l'étape (iii), on guide les bandes métalliques (13, 15, 35) qui ont été déroulées à partir d'un mécanisme respectif de déroulement de bobine (12, 14, 34) dans une atmosphère d'un gaz de protection (28).

2. Procédé selon la revendication 1, **caractérisé en ce que**, avant l'étape (ii) et/ou au cours de l'étape (ii) et/ou avant l'étape (iii), on chauffe les bandes métalliques (13, 15) à une température qui est supérieure à la limite de recristallisation ; de préférence **en ce que** ce chauffage est mis en œuvre au moyen d'un chauffage supplémentaire du type à induction (24.1, 24.2, 24.3).

3. Procédé selon l'une quelconque des revendications précédentes, **caractérisé en ce que**, à l'étape (iii), le matériau de placage (15) est appliqué sur les côtés opposés de la bande métallique (13) constituée du matériau de base; dans lequel le matériau de placage est constitué respectivement du même matériau et est déroulé à l'étape (i) à partir de mécanismes de déroulement de bobine (14, 34) respectivement séparés.

4. Procédé selon l'une quelconque des revendications précédentes, **caractérisé en ce que** le matériau de base et ledit au moins un matériau de placage sont constitués par des qualités d'acier respectivement différentes ; dans lequel, à l'étape (i), on déroule un matériau de placage supplémentaire sous la forme d'une bande métallique (35) à partir d'un troisième mécanisme de déroulement de bobine (34) et on met en oeuvre les étapes (ii) et (iii) qui s'y raccordent avec au total trois couches qui sont réalisées à partir des bandes métalliques (13, 15, 35) qui ont été déroulées à partir des mécanismes respectifs de déroulement de bobine (12, 14, 34).

5. Procédé selon la revendication 4, **caractérisé en ce que** les bandes métalliques (15, 35) constituées respectivement par le matériau de placage sont réalisées à partir de matières respectivement différentes ; dans lequel ces bandes métalliques (15, 35) sont appliquées, soit sur les côtés opposés de la bande métallique (13) constituée du matériau de base, soit sur le même côté de ladite bande métallique.

6. Procédé selon l'une quelconque des revendications précédentes, **caractérisé en ce que**, au cours de l'étape (i) et/ou avant l'étape (ii) et/ou au cours de l'étape (ii) et/ou avant l'étape (iii), les bandes métalliques (13, 15, 35) qui ont été déroulées à partir des mécanismes de déroulement de bobine (12, 14, 34) sont soumises à un guidage latéral pour ainsi orienter les bandes métalliques respectives (13, 15, 35) dans la direction l'une de l'autre; de préférence **en ce que** l'on prévoit, pour le guidage latéral, au moins un mécanisme (26) qui est destiné à influencer les côtés, sous la forme d'une règle de guidage qui est soumise à un déplacement par l'intermédiaire d'un actionneur, en particulier avec une force prédéterminée, dans la direction du milieu de la bande.

7. Procédé selon l'une quelconque des revendications précédentes, **caractérisé en ce que**, au cours de l'étape (iii), les bandes métalliques (13, 15, 35) qui ont été déroulées à partir d'un mécanisme de déroulement de bobine respectif (12, 14, 34) sont guidées dans une atmosphère de gaz de protection (28).

8. Procédé selon l'une quelconque des revendications précédentes, **caractérisé en ce que**, dans la foulée de l'étape (iii), on enregistre une qualité matérielle du matériau composite continu individuel (11) que l'on a obtenu sous la forme d'une bande, en particulier par exposition aux rayons X et/ou en utilisant des ultrasons ; de préférence, **en ce que**, sur base de la qualité matérielle enregistrée, par l'intermédiaire d'un mécanisme de commande, on génère un signal de traitement avec lequel, en forme un circuit de commande pour le procédé.

9. Procédé selon l'une quelconque des revendications précédentes, **caractérisé en ce que** ce procédé est mis en œuvre de manière automatique en fonction d'au moins un paramètre de processus prédéterminé ; de préférence **en ce que** ce paramètre de processus est choisi parmi le groupe constitué en particulier par la vitesse, en vigueur avant l'étape (ii), des bandes métalliques (13, 15, 35) qui ont été déroulées à partir des mécanismes de déroulement de bobine (12, 14, 34), par une différence de température des bandes métalliques (13, 15, 35) avant l'étape (ii) et/ou avant l'étape (iii), par les propriétés matérielles différentes et par le rapport d'épaisseur des partenaires matériels respectivement des bandes métalliques que l'on utilise, par une vitesse respective des cylindres de travail (A1, A2) du mécanisme de placage-laminage (16.1 ; 16.i) et/ou par une réduction de l'épaisseur, que l'on a obtenue à l'étape (iii), du matériau composite continu individuel (11) sous la forme d'une bande.

10. Procédé selon l'une quelconque des revendications précédentes, **caractérisé en ce que**, entre les bandes métalliques (13, 15) qui doivent être guidées de manière conjointe, on incorpore au moins une couche intermédiaire sous une forme solide, liquide ou pulvérulente, qui a un effet de passivation ou d'activation sur les surfaces des bandes métalliques (13, 15), opposées l'une à l'autre.

11. Dispositif (10) destiné à la fabrication d'un matériau composite continu (11) sous la forme d'une bande, comprenant :
au moins un premier mécanisme de déroulement de bobine (12) avec lequel on procure une bande métallique (13) réalisée en acier ou réalisée à partir d'un alliage à base d'acier, qui fait office de matériau de base ;
au moins un deuxième mécanisme de déroulement de bobine (14) avec lequel on procure une bande métallique (15) réalisée en acier ou réalisée à partir d'un alliage à base d'acier, qui fait office de matériau de placage ;
au moins un laminoir (16) sous la forme d'un mécanisme de laminage-placage (16.1) qui est monté en ligne avec le premier et le deuxième mécanisme de déroulement de bobine (12, 14) et respectivement en aval des mécanismes en question ; et
un mécanisme de guidage (18) de manière conjointe qui est disposé entre d'une part les mécanismes de déroulement de bobine (12, 14, 34) et d'autre part le mécanisme de laminage-placage (16.1) ;
au moins un mécanisme de nettoyage (20) sous la forme d'un mécanisme de décalaminage travaillant avec de l'eau sous haute pression, qui est disposé entre d'une part les mécanismes de déroulement de bobine (12, 14) et d'autre part le mécanisme de guidage (18) de manière conjointe, et au moyen duquel les bandes métalliques (13, 15) qui ont été déroulées à partir des mécanismes de déroulement de bobine (12, 14) peuvent être soumises à un décalaminage ;
**caractérisé**
**en ce que** le premier et le deuxième mécanisme de déroulement de bobine (12, 14) sont logés sous une atmosphère de gaz de protection dans au moins une chambre (22) qui peut être chauffée; dans lequel les bandes métalliques (13, 15) qui ont été déroulées à partir des mécanismes de déroulement de bobine (12, 14) peuvent être amenées, à l'état chaud, dans la direction l'une de l'autre au moyen du mécanisme de guidage (18) de manière conjointe ;
**en ce que**, entre le mécanisme de guidage (18) de manière conjointe et le mécanisme de laminage-placage (16.1) qui est disposé directement en aval par rapport au premier cité, on prévoit au moins un mécanisme (30) qui est destiné à influencer la température, sous la forme d'un chauffage du type à induction, au moyen duquel les bandes métalliques (13, 15) qui ont été déroulées à partir des mécanismes respectifs de déroulement de bobine (12, 14) peuvent être chauffées contre leurs surfaces opposées l'une à l'autre, d'une manière telle que l'on peut soumettre, à un laminage à chaud dans le mécanisme de laminage-placage (16.1), un agencement de partenaires matériels constitué par les bandes métalliques (13, 15) qui ont été déroulées à partir des mécanismes de déroulement de bobine (12, 14), d'une manière telle que l'on obtient, par l'intermédiaire d'un laminage-placage, un matériau composite continu individuel (11) sous la forme d'une bande, constitué par le matériau de base et par le matériau de placage ; et
**en ce que** l'on prévoit un mécanisme (28) qui génère un gaz de protection, sous la forme d'une partie du mécanisme de guidage (18) de manière conjointe ; dans lequel les bandes métalliques (13, 15), qui ont été déroulées à partir des mécanismes respectifs de déroulement de bobine (12, 14), sont guidées au sein du mécanisme (28) qui génère un gaz de protection, dans une atmosphère de gaz de protection.

12. Dispositif (10) selon la revendication 11, **caractérisé en ce qu'**au moins un mécanisme de déroulement de bobine (12, 14) présente un mécanisme d'échange rapide, au moyen duquel on peut envisager un échange de bobines ; de préférence, **en ce que** le mécanisme d'échange rapide comprend un mécanisme de soudage destiné à souder l'une à l'autre des bandes métalliques (13, 15) qui se succèdent.

13. Dispositif (10) selon la revendication 11 ou 12, **caractérisé en ce qu'**au moins un mécanisme de déroulement de bobine (12; 14) présente une multitude de modules de déroulement qui peuvent être amenés les uns derrière les autres dans une position de déroulement ; de préférence **en ce que** ce mécanisme de déroulement de bobine (12; 14) comprend un mécanisme de soudage destiné à souder l'une à l'autre des bandes métalliques (13, 15) qui se succèdent.

14. Dispositif (10) selon l'une quelconque des revendications 11 à 13, **caractérisé en ce que**, en amont par rapport au mécanisme de guidage (18) de manière conjointe et/ou sous la forme d'une partie du mécanisme en question, on prévoit au moins un mécanisme de chauffage (24) ; dans lequel les bandes métalliques (13, 15) qui ont été déroulées à partir des mécanismes de déroulement de bobine (12, 14) sont guidées d'un bout à l'autre à travers ce mécanisme de chauffage (24) ; de préférence, **en ce qu'**au moins un mécanisme de chauffage (24) fonctionne conformément au principe d'un chauffage supplémentaire du type à induction (24.1, 24.2, 24.3) ; de manière plus préférée, **en ce que**, pour les bandes métalliques (13, 15) qui ont été déroulées, on prévoit respectivement un mécanisme de chauffage séparé (24).

15. Dispositif (10) selon l'une quelconque des revendications 11 à 14, **caractérisé en ce que** l'on prévoit au moins un mécanisme (26) qui est destiné à influencer les côtés, qui est disposé en amont par rapport au mécanisme de guidage (18) de manière conjointe ou sous la forme d'une partie de ce dernier et/ou en amont par rapport au mécanisme de laminage-placage (16.1) ; dans lequel les bandes métalliques (13, 15), qui ont été déroulées à partir des mécanismes de déroulement de bobine (12, 14), peuvent être amenées, contre leurs bords latéraux, en contact avec le mécanisme (26) qui est destiné à influencer les côtés, pour pouvoir être orientées latéralement dans la direction l'une de l'autre ; de préférence, **en ce que** ledit au moins un mécanisme (26) qui est destiné à influencer les côtés est réalisé sous la forme d'une règle de guidage qui peut faire l'objet d'un déplacement, en particulier avec une force prédéfinie, dans la direction du milieu de la bande.

16. Dispositif (10) selon l'une quelconque des revendications 11 à 15, **caractérisé par** un mécanisme (28) qui génère un gaz de protection, que l'on prévoit sous la forme d'une partie d'un mécanisme de laminage-placage (16.1), disposé en aval en position directement adjacente au mécanisme de guidage (18) de manière conjointe; dans lequel les bandes métalliques qui ont été déroulées à partir des mécanismes de déroulement de bobine respectifs (12, 14) sont guidées dans une atmosphère de gaz de protection (28) au sein du mécanisme (28) qui génère un gaz de protection.

17. Dispositif (10) selon l'une quelconque des revendications 11 à 16, **caractérisé en ce que**, en aval, par rapport à un mécanisme de laminage-placage (16.1), on prévoit un mécanisme de mesure (32) au moyen duquel on peut enregistrer une qualité matérielle du matériau continu individuel (11) que l'on a obtenu sous la forme d'une bande, en particulier par exposition aux rayons X et/ou en utilisant des ultrasons.

18. Dispositif (10) selon l'une quelconque des revendications 11 à 17, **caractérisé en ce que** l'on prévoit un troisième mécanisme de déroulement de bobine (34) qui est disposé en ligne avec le mécanisme de laminage-placage (16.1) et avec lequel on procure une bande métallique supplémentaire (35) sous la forme d'un matériau de placage.
